# EUROPÄISCHE PATENTANMELDUNG

(11) **EP 1 090 708 A2**
(43) Veröffentlichungstag der Anmeldung: **11.04.2001**
(21) Anmeldenummer: 00120429.6
(22) Anmeldetag: 19.09.2000
(51) Int. Cl.: B23K 26/00, B23K 37/04

(54) **Schweisskopf für eine Bandumreifungsmaschine**

(30) Priorität: 08.10.1999 DE 19948880
(71) Anmelder: SMB SCHWEDE MASCHINENBAU GmbH, 95497 Goldkronach (DE)
(72) Erfinder:
(74) Vertreter: Hübner, Gerd, Dipl.-Phys.

(57) **Zusammenfassung**

Ein Schweißkopf für eine Bandumreifungsmaschine ist versehen mit
- einem Lagergehäuse (2),
- mehreren Klemmbacken (12, 13, 14) zur Fixierung und Beaufschlagung des Bandanfangs (3) und des damit überlappenden Bandabschnittes (38) während des Rückzuges und des Verschweißens des Umreifungsbandes (4),
- einer Druckplatte (32) an der Oberseite des Schweißkopfes (1) als Gegenhalter bei der Beaufschlagung des Bandanfangs (3) und des damit überlappenden Bandabschnitts (38) während des Verschweißens, und
- einer Verschweißeinrichtung im Schweißkopf (1) zur Verschweißung des Bandanfangs (3) mit dem damit überlappenden Bandabschnitt (38).

Die Verschweißeinrichtung ist durch eine im Schweißkopf (1) auf die zu verschweißenden Bandabschnitte (3, 38) einwirkende Laserstrahl-Verschweißeinrichtung (40) gebildet.

## Beschreibung

Die Erfindung betrifft einen Schweißkopf für eine Bandumreifungsmaschine mit den im Oberbegriff des Anspruches 1 angegebenen Merkmalen.

Ein derartiger Schweißkopf ist beispielsweise aus der DE 297 16 897 U1 bekannt. Generell sind solche Schweißköpfe mit sich erhitzenden Schweißzungen auf dem Gebiet von Umreifungsmaschinen üblich und unter anderem auch von der Anmelderin seit Jahren benutzt. In einem Lagergehäuse sind dabei mehrere jeweils quer zur Bandebene verschiebbar geführte, in Bandlaufrichtung hintereinander angeordnete Klemmbacken vorgesehen, die zur Fixierung und Beaufschlagung des Umreifungsbandes dienen. Die Klemmbacken werden über eine Kurvenscheibensteuerung in ihre jeweilige Position verbracht.

Der Schweißkopf weist ferner eine am Lagergehäuse parallel zur Umreifungsebene und quer zur Bandlaufrichtung verschiebbar geführte Druckplatte an der Oberseite als Gegenhalter bei der Beaufschlagung des Bandanfangs und des damit überlappenden Bandabschnittes während des Verschweißens auf. Eine Schweißzunge, die zwischen die zu verschweißenden Bandlagen einführbar ist, ist parallel zur Druckplatte am Lagergehäuse geführt.

Problematisch bei derartigen Schweißzungen nach dem Stand der Technik ist die Tatsache, daß die Einschub- und Auslenkbewegung der Schweißzungenposition durch eine relativ aufwendige mechanische Einrichtung gesteuert werden muß.

Dies bringt einerseits einen hohen mechanisch-konstruktiven Aufwand mit sich, der sich auch negativ auf die mit dem Schweißkopf erreichbare Taktzeit auswirkt. Andererseits nimmt die Schweißzunge und ihr gesamter Betätigungsapparat einen vergleichsweise großen Raum im Schweißkopf ein, was angesichts der Vielzahl beweglicher und zu steuernder Bauteile im Schweißkopf grundsätzlich von Nachteil ist.

Ausgehend von den geschilderten Nachteilen des Standes der Technik liegt der Erfindung die Aufgabe zugrunde, die Verschweißeinrichtung eines gattungsgemäßen Schweißkopfes so zu verbessern, daß eine kompaktere Ausbildung des Kopfes selbst und eine zuverlässige Umreifungsbandverschweißung mit verringertem mechanischen und steuerungstechnischen Aufwand bei Herstellung und Betrieb des Schweißkopfes erzielbar sind.

Diese Lösung wird durch die im Kennzeichnungsteil des Anspruches 1 angegebenen Merkmale gelöst, wonach die Verschweißeinrichtung durch eine im Schweißkopf auf die zu verschweißenden Bandabschnitte einwirkende Laserstrahl-Verschweißeinrichtung gebildet ist.

Für die Erfindung erfolgt also ein fundamentaler Wechsel in der Art und Weise der Anschmelzung der umreifenden Bandabschnitte. Während der Stand der Technik mit einem zu erhitzenden mechanischen Körper arbeitet, der in direktem Kontakt mit den zu verschweißenden Bandabschnitten zu bringen ist, arbeitet die Erfindung mit elektromagnetischer Strahlung in Form von Laserstrahlen. Damit entfällt vollständig die Notwendigkeit eines - wie erörtert - aufwendig zwischen die Bandabschnitte zu verbringenden mechanischen Teils. Vielmehr können die Bandabschnitte sofort nach dem Umreifen und Abtrennen der Umreifungsbandschlinge vom Bandvorrat mit der Laserstrahlung beaufschlagt, angeschmolzen und durch die Preßwirkung der Klemmbacken dauerhaft verbunden werden.

Die Laserstrahlung als solche kann gemäß bevorzugten Ausführungsformen der Erfindung beispielsweise über in den Klemmbacken oder - bei entsprechendem Platzangebot - zwischen solchen Klemmbacken angeordneten Laserdioden erzeugt werden. Damit entfallen aufwendige laseroptische Führungselemente. Allerdings ist es auch denkbar, einen Versorgungslaser außerhalb der Klemmbacken im Schweißkopf oder an anderer Stelle der Bandumreifungsmaschine anzuordnen und über faseroptische Lichtleiterkabel die Laserstrahlung zu den zu verschweißenden Bandabschnitten im Kopf zuzuführen. Dies kann durch die Klemmbacken hindurch oder beispielsweise über die als Gegenhalter dienende Druckplatte erfolgen.

Weitere bevorzugte Ausführungsformen der Erfindung sind den Unteransprüchen sowie der nachfolgenden Beschreibung von Ausführungsbeispielen anhand der beigefügten Zeichnungen entnehmbar. Es zeigen:
- Fig. 1: eine ausschnittsweise perspektivische Darstellung eines Schweißkopfes, sowie
- Fig. 2 und 3: ausschnittsweise Seitenansichten durch Schweißköpfe mit zwei unterschiedlichen Ausführungsformen der Laserschweißeinrichtung.

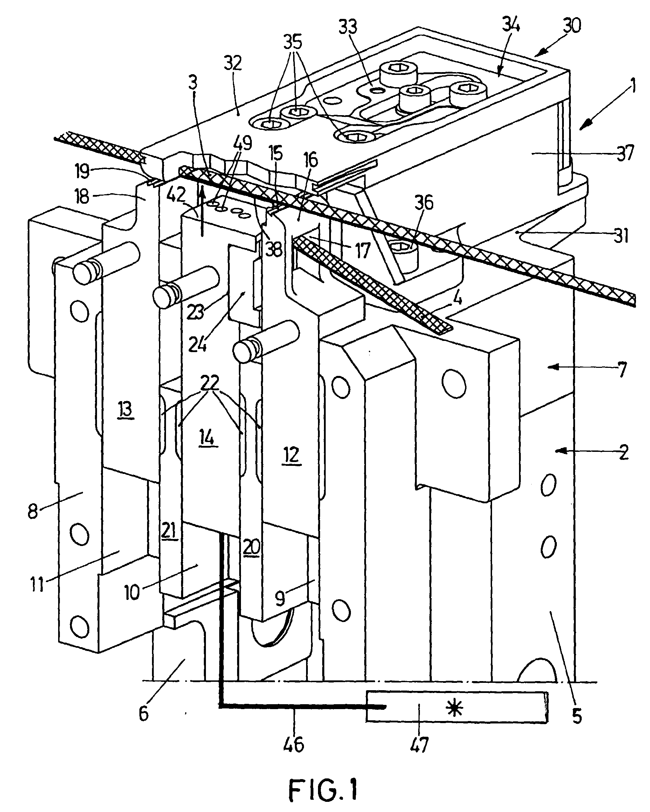

Wie aus Fig. 1 hervorgeht, weist ein als Ganzes mit 1 bezeichneter Schweißkopf für eine nicht näher dargestellte Bandumreifungsmaschine ein als Gußblock ausgebildetes Lagergehäuse 2 als Rückgrat für alle Funktionsteile auf. Das Lagergehäuse 2 besteht dabei aus einer nicht dargestellten Grundplatte, mit der das Lagergehäuse 2 z.B. an einer Rahmenstrebe des Maschinengestells der Umreifungsmaschine angeflanscht wird. Von der Grundplatte erstrecken sich zwei einstückig angeformte, seitliche Stützen 5, 6 nach oben, an denen der Gehäusekörper 7 in integraler Weise ausgebildet ist. Letzerer trägt entsprechende Aufnahmen und Befestigungen für die weiteren Funktionsteile des Schweißkopfes, wie dies noch näher beschrieben wird.

Wie insbesondere aus Fig. 1 deutlich wird, sind in einer Außenseite 8 des Gehäusekörpers 7 jeweils getrennte Führungsbahnen 9, 10, 11 für jeweils einen Klemmbacken 12, 13, 14 des Schweißkopfes 1 ausgebildet. Der erste Klemmbacken 12 dient zur Fixierung des vorlaufenden Anfangsabschnitts 3 eines in die Bandumreifungsmaschine eingeschossenen Umreifungsbandes 4 im Schweißkopf 1 während des Rückzuges zum Straffziehen des Bandes 4 und während dessen Verschweißens. Der Bandanfang 3 wird dabei durch eine geriffelte Klemmfläche 15 am gegenüber der Grundbreite des Klemmbackens 12 verschmälerten Kopf 16 fixiert. In diesem Kopf 16 ist ferner ein Fenster 17 vorgesehen, durch das das in die Bandumreifungsmaschine eintretende Bandtrum hindurchläuft.

Der zweite Klemmbacken 13 dient zur Fixierung des mit dem Bandanfang überlappenden Bandabschnittes während des Verschweißens dieser beiden Bandbereiche. Auch bei diesem Klemmbacken 13 ist ein schmaler Kopf 18 mit geriffelter Klemmfläche 19 vorgesehen.

Der dritte Klemmbacken 14 ist zwischen dem ersten und zweiten Klemmbacken 12, 13 angeordnet und dient zur gemeinsamen Beaufschlagung des Bandanfangs und des damit überlappenden Bandabschnittes während des Verschweißens dieser beiden Bandteile. Da das Zusammenspiel der drei Klemmbacken 12, 13, 14 beim Einschießen, Rückziehen, Verschweißen und Abschneiden der um ein Umreifungsgut gebildeten Schlinge analog zum Stand der Technik erfolgt, ist eine ausführende Beschreibung dieser Vorgänge nicht notwendig.

Um auf den Grundaufbau des Schweißkopfes 1 zurückzukommen, ist in Fig. 1 noch eine Druckplatteneinheit 30 dargestellt, die auf eine entsprechende Flanschfläche 31 auf der Oberseite des Gehäusekörpers 7 aufgebaut wird. Eine nähere Beschreibung folgt später.

Der Aufbau der Klemmbacken 12, 13, 14 und ihrer Führungsbahnen 9, 10, 11 ist ebenfalls aus Fig. 1 entnehmbar. So sind die Führungsbahnen 9, 10, 11 jeweils durch im Querschnitt dem der Klemmbacken 12, 13, 14 entsprechende Ausnehmungen im Gehäusekörper 7 gebildet, die durch einstückig an das Gußteil angeformte Stege 20, 21 voneinander getrennt sind. In den die Klemmbacken 12, 13, 14 jeweils seitlich flankierenden Flächen sind flache Schmiermitteltaschen 22 eingeformt, um einen einwandfreien und reibungsarmen Lauf der Klemmbacken 12, 13, 14 in den Führungsbahnen 9, 10, 11 zu gewährleisten.

Wie aus Fig. 1 deutlich wird, fluchten die Außenseite 8 des Gehäusekörpers 7 und die entsprechenden Seitenflächen der Klemmbacken 12, 13, 14. Geschlossen wird nun der Gehäusekörper 7 mit diesen Führungsbahnen 9, 10, 11 und den Klemmbacken 12, 13, 14 durch einen seitlich auf die Außenseite 8 aufgeschraubten Gehäusedeckel (nicht dargestellt).

Fig. 1 zeigt ferner einen am oberen Ende des mittleren Klemmbackens 14 oberhalb des entsprechenden Steges 20 in einer seitlichen Ausnehmung 23 sitzenden Messerblock 24, der sich an der ihm zugewandten Seite des ersten Klemmbackens 12 mit einer Schneidenfläche 25 und einer Gleitfläche 26 abstützt. Der Messerblock 24 ist in Richtung zum ersten Klemmbacken 12 durch eine nicht dargestellte Schraubendruckfeder beaufschlagt, die in zwei Sackbohrungen im Klemmbacken 14 bzw. im Messerblock 24 sitzt. Die Schneidenfläche 25 wirkt mit dem Fenster 17 im ersten Klemmbacken 12 zusammen und trennt bei einer entsprechenden Relativbewegung von Klemmbacken 12 und 14 (mit Messerblock 24) zueinander das durch das Fenster 17 laufende Umreifungsband 4 durch.

Anhand von Fig. 1 ist der Aufbau der Druckplatteneinheit 30 zu erläutern. Die eigentliche Druckplatte 32 ist grundsätzlich parallel zur Umreifungsbandebene und quer zur Bandlaufrichtung verschiebbar geführt und an der Oberseite des Schweißkopfes als Gegenhalter bei der Beaufschlagung des Bandanfangs und des damit überlappenden Bandabschnittes während des Verschweißens angeordnet. Die Verschiebbarkeit quer zur Bandlaufrichtung ist vorzusehen, um nach dem Verschweißen des Bandes in seinem straffgezogenen Zustand die Umreifungsbandschlinge zum Abtransport des umreiften Gutes freizugeben. Durch die Querverschiebung wird die Druckplatte dabei aus ihrer Stellung zwischen Umreifungsgut und Umreifungsbandschlinge herausgezogen.

Die Schiebeführung der Druckplatte 32 erfolgt durch ein an die Druckplatte 32 einstückig angeformtes, im wesentlichen plattenförmiges Führungsteil 33, das auf seiner Oberseite mit Ausnehmungen 34 zur Gewichtsersparnis versehen ist. Dies wirkt sich günstig auf die bei der Beschleunigung der Druckplatte 32 während des seitlichen Verschiebens auftretenden Kräfte und Momente aus. Es kann damit eine Verringerung der Verschleißerscheinungen erzielt werden.

Am Führungsteil 33 ist ein Führungsschlitten (nicht dargestellt) mittels der Schrauben 35 befestigt, der mit der Unterfläche des Führungsteils 33 jeweils eine nach außen offene Führungsnut bildet. In diese Führungsnuten greifen von außen nach Art einer Nut- und Feder-Verbindung Führungsstege eines am Lagergehäuse 2 auf der Flanschfläche 31 des Gehäusekörpers 7 mittels Schrauben 36 montierten Führungsträgers 37 ein.

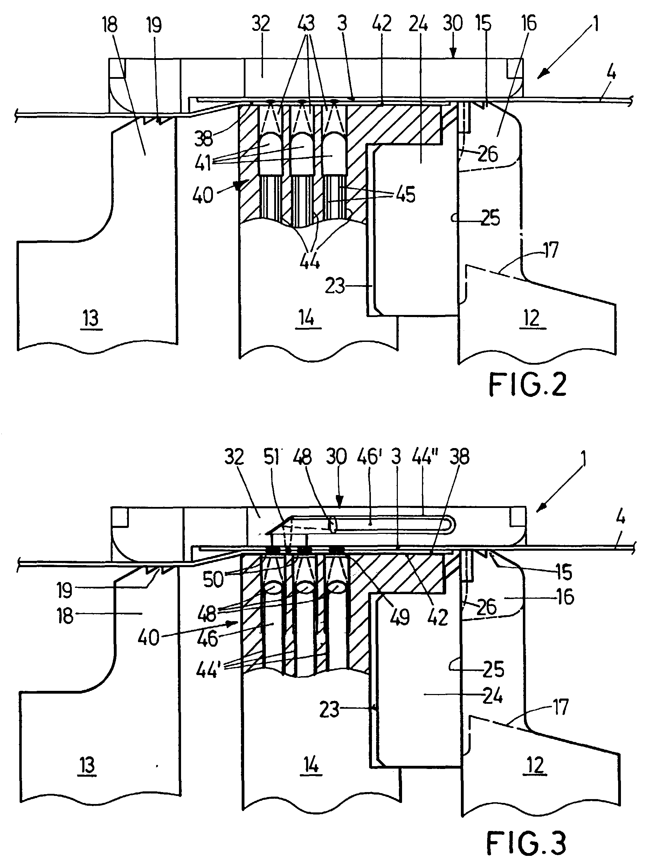

Der eigentliche Kern der Erfindung ist anhand der Fig. 2 bzw. 3 zu erläutern. Darin ist nämlich im Detail die Art und Weise erkennbar, wie die beiden überlappenden Umreifungsbandabschnitte, nämlich der Anfangsbandabschnitt 3 und der vom Bandvorrat mittels des Messerblocks 24 abgetrennte Endbandabschnitt 38 miteinander zu verschweißen sind.

So ist bei der Ausführungsform gemäß Fig. 2 die Laserschweißeinrichtung 40 durch eine Anzahl von nebeneinander im mittleren Klemmbacken 14 positionierten Laserdioden 41 gebildet, die mit einem bestimmten Abstand von einigen Millimetern unterhalb der Klemmfläche 42 versenkt in Lagerkanälen 43 angeordnet sind. Diese Lagerkanäle 43 setzen sich in Durchführungskanäle 44 fort, in denen die elektrischen Zuleitungen 45 für die Energieversorgung der Laserdioden 41 verlaufen. Diese Zuleitungen 45 sind mit einem entsprechenden Steuergerät (nicht dargestellt) verbunden, das die Strahlemission der Laserdioden 41 steuert.

Wie in Fig. 2 strichliert angedeutet ist, weisen die Laserdioden 41 eine konvergierende Abstrahlcharakteristik mit einer Brennweite auf, die etwa dem Abstand zwischen den Laserdioden 41 und der Kontaktfläche zwischen den beiden Bandabschnitten 3, 38 entspricht. Bei einer entsprechenden, für die Laserstrahlung transparenten oder zumindest opaken Eigenschaft des Bandmaterials wird die Laserenergie in die Kontaktebene zwischen den beiden Bandabschnitten 3, 38 gebündelt, wo sich das Bandmaterial erwärmt, anschmelzt und unter dem gleichzeitigen Druck des Klemmbackens 14 eine Schmelzverbindung zwischen den beiden Abschnitten 3, 38 gebildet wird. Die Art, Wellenlänge, Energiedichte und Abstrahlcharakteristik der Laserdioden ist nach praktischen Gegebenheiten und insbesondere nach der Bandart und -qualität zu selektieren und kann breit variieren. Die treffende Wahl kann durch einfache Versuche ermittelt werden.

Fig. 3 zeigt eine weitere Ausführungsform der Erfindung, bei der die Laserstrahlen nicht direkt im Klemmbacken 14 erzeugt, sondern durch faseroptische Lichtleiterkabel 46 von einem in Fig. 1 schematisch angedeuteten Versorgungslaser 47 herangeführt werden. Dazu laufen die Lichtleiterkabel 46 in den Klemmbacken 14 ein und werden über Durchführungskanäle 44' bis vor die Klemmfläche 42 gezogen. An den Enden der Lichtleiterkabel 46 sind Sammellinsen 48 als optische Elemente zur Bündelung des aus dem jeweiligen Lichtleiterkabel 46 austretenden Laserstrahl auf die zu verschweißenden Bandabschnitte 3, 38 vorgesehen. Die Bündelungscharakteristik kann dabei so gewählt werden, daß kein zu scharfer Focus, sondern mehr ein das Volumen des Umreifungsbandes durchsetzender Bündelungsbereich erzielt wird, wie dies in Fig. 3 durch die gegenüber Fig. 2 größeren schraffierten Bereiche in den beiden Bandabschnitten 3, 38 angedeutet ist.

Aus Fig. 3 ist ferner entnehmbar, daß die Mündungsöffnungen 49 der Durchführungskanäle 44' jeweils durch transparente Abdeckungen 50 verschlossen sind, so daß das Eindringen von Staub, Bandabrieb-Partikeln und dergleichen in den Durchführungskanal 44' vermieden wird.

Wie in Fig. 3 schließlich noch angedeutet ist, kann eine gegebenenfalls zusätzliche Laserbestrahlung für den Verschweißvorgang dadurch realisiert werden, daß ein Laserstrahl über die Druckplatte 32 herangeführt wird. Dazu verläuft ein weiteres Lichtleiterkabel 46' in einem Durchführungskanal 44'' in der Druckplatte 32, wobei geeignete Maßnahmen zur Umlenkung des aus dem Kabel 46' austretenden Laserstrahls in die Verschweißungsebene in Form von Umlenkspiegeln 51 vorgesehen sind.

Die Funktionsweise des Schweißkopfes in allen gezeigten Ausführungsformen ist kurz wie folgt zu erörtern:

Bei geöffneten Klemmbacken 12, 13, 14 wird ein Umreifungsband 4 durch den Schweißkopf 1 und einen nachfolgenden Bandrahmen einer Umreifungsmaschine eingeschossen, bis der vorlaufende Anfangsbandabschnitt 3 wieder in den Schweißkopf 1 eintritt. Der Anfangsbandabschnitt 3 nimmt dann die in den Fig. 2 und 3 gezeigte Stellung ein. Der rechte Klemmbakken 12 wird zur Fixierung dieser Lage des Anfangsbandabschnittes 3 nach oben gefahren, wonach das Umreifungsband 4 aus dem Bandrahmen und rückwärts durch den Schweißkopf 1 gezogen wird, bis das Umreifungsband 4 in einer straffen Schlinge um das zu umreifende Gut gelegt ist. In diesem Zustand fährt der linke Klemmbacken 13 bezogen auf Fig. 2 bzw. 3 in die dort gezeigte Position und fixiert somit die Schlinge in der gestrafften Position. Anschließend fährt der mittlere Klemmbacken 14 mit dem Messerblock 24 nach oben, wodurch einerseits der Bandendabschnitt 38 vom Bandvorrat abgeschnitten wird. Gleichzeitig beaufschlagt die Klemmfläche 42 des Klemmbackens 14 die zu verschweißenden Bandabschnitte 3, 38, wobei gleichzeitig die Laserschweißeinrichtung 40 aktiviert wird. Lichtenergie wird dabei in die Abschnitte 3, 38 eingebracht, die sich erhitzen, anschmelzen und durch den Druck des Klemmbackens 14 gegen die Druckplatte 32 verschweißen. Anschließend werden alle Klemmbacken 12, 13, 14 nach unten und die Druckplatte 32 zur Seite weggefahren, so daß die verschweißte Umreifungsbandschlinge frei wird und der umreifte Stapel abtransportiert werden kann.

## Patentansprüche

1. Schweißkopf für eine Bandumreifungsmaschine mit
- einem Lagergehäuse (2),
- mehreren Klemmbacken (12, 13, 14) zur Fixierung und Beaufschlagung des Bandanfangs (3) und des damit überlappenden Bandabschnittes (38) während des Rückzuges und des Verschweißens des Umreifungsbandes (4),
- einer Druckplatte (32) an der Oberseite des Schweißkopfes (1) als Gegenhalter bei der Beaufschlagung des Bandanfangs (3) und des damit überlappenden Bandabschnitts (38) während des Verschweißens, und
- einer Verschweißeinrichtung im Schweißkopf (1) zur Verschweißung des Bandanfangs (3) mit dem damit überlappenden Bandabschnitt (38), **dadurch gekennzeichnet, daß** die Verschweißeinrichtung durch eine im Schweißkopf (1) auf die zu verschweißenden Bandabschnitte (3, 38) einwirkende Laserstrahl-Verschweißeinrichtung (40) gebildet ist.

2. Schweißkopf nach Anspruch 1, **dadurch gekennzeichnet, daß** die Verschweißeinrichtung (40) eine oder mehrere in mindestens einem der Klemmbacken (12, 13, 14) angeordnete Laserdioden (41) aufweist.

3. Schweißkopf nach Anspruch 2, **dadurch gekennzeichnet, daß** die Laserdioden (41) in zu den zu verschweißenden Bandabschnitten (3, 38) hin offenen Lagerkanälen (43) in dem entsprechenden Klemmbacken (14) angeordnet sind.

4. Schweißkopf nach einem der Ansprüche 1 bis 3, **dadurch gekennzeichnet, daß** die Laserschweißeinrichtung (40) durch einen außerhalb der Klemmbacken (12, 13, 14) angeordneten Versorgungslaser (47) gebildet ist, von dem mindestens ein faseroptisches Lichtleiterkabel (46, 46') zur Führung eines Laserstrahls zu den zu verschweißenden Bandabschnitten (3, 38) ausgeht.

5. Schweißkopf nach einem der Ansprüche 1 bis 4, **dadurch gekennzeichnet, daß** die Laserschweißeinrichtung (40) optische Elemente (48) zur Bündelung des Laserstrahles auf die zu verschweißenden Bandabschnitte (3, 38) aufweist.

6. Schweißkopf nach Anspruch 2 oder 4, **dadurch gekennzeichnet, daß** die Versorgungsleitungen (45) der Laserdioden (41) oder die Lichtleiterkabel (46, 46') jeweils in einem Durchführungskanal (44, 44') im zugeordneten Klemmbacken (14) untergebracht sind.

7. Schweißkopf nach Anspruch 5 und 6, **dadurch gekennzeichnet, daß** die optischen Elemente jeweils durch Linsen (48) im Endbereich des jeweiligen Durchführungskanals (44') gebildet sind.

8. Schweißkopf mindestens nach Anspruch 6, **dadurch gekennzeichnet, daß** die Mündungsöffnung (49) des Durchführungskanals (44') zu den zu verschweißenden Bandabschnitten (3, 38) hin durch eine transparente Abdeckung (50) verschlossen ist.

9. Schweißkopf nach einem der Ansprüche 1 bis 8, **dadurch gekennzeichnet, daß** ein Laserstrahl über die Druckplatte (32) an die zu verschweißenden Bandabschnitte (3, 38) herangeführt ist.
